# EUROPEAN PATENT SPECIFICATION

(11) **EP 4 372 890 B1**
(45) Date of publication and mention of the grant of the patent: **04.02.2026**
(21) Application number: 23816395.0
(22) Date of filing: 01.06.2023
(51) Int. Cl.: H01M 50/204, H01M 50/209, H01M 50/289, H01M 50/367, H01M 50/358

(54) **BATTERY PACK**
BATTERIEPACK
BLOC-BATTERIE

(30) Priority: 03.06.2022 KR 20220068268; 14.04.2023 KR 20230049566
(43) Date of publication of application: 22.05.2024
(60) Divisional application: 25220177.7
(73) Proprietor: LG Energy Solution, Ltd., Seoul 07335 (KR)
(72) Inventor: YANG, Chang Hyeon, Daejeon 34122 (KR); SHIN, Ju Hwan, Daejeon 34122 (KR); LEE, Jae Hyun, Daejeon 34122 (KR)
(74) Representative: Plasseraud IP
(86) International application number: PCT/KR2023/007553
(87) International publication number: WO 2023/234735

(56) References cited:
- EP-A1- 3 916 894
- EP-A1- 3 926 747
- CN-A- 111 668 408
- CN-A- 111 668 408
- CN-A- 113 540 684
- CN-A- 113 594 598
- CN-U- 215 816 098
- JP-A- 2022 516 519

## Description

### [Technical Field]

The present invention relates to a battery pack, more particularly, the battery pack of the present invention is characterized in that a high temperature gas generated by any one of the cell stack assembly can be released to the outside by using a supplementary partition wall interposed between the cell stack assembly and having a gas flow path formed therein, thereby preventing the influence of the gas on the neighboring cell stack assembly.

### [Background Art]

Types of secondary batteries include lithium-ion cells, lithium polymer cells, nickelcadmium cells, nickel-hydrogen cells, nickel-zinc cells, etc. These unit secondary battery cells, i.e. unit battery cells, have an operating voltage of about 2.5 V to 4.2 V. Therefore, if a higher output voltage is required, a plurality of battery cells may be connected in series to form a battery pack. In addition, depending on the charge and discharge capacity required for the battery pack, a plurality of battery cells may be connected in parallel to form a battery pack. Thus, the number of battery cells included in the battery pack may be varied depending on the required output voltage or charge/discharge capacity.

For example, when forming a battery pack by connecting a plurality of battery cells in series/parallel, it is common to first form a battery module of the plurality of battery cells, and then add other components to form a battery pack using the battery module. In other words, battery module refers to a component with a plurality of secondary batteries connected in series or parallel, and battery pack refers to a component with a plurality of battery module connected in series or parallel to increase capacity, power output, etc.

On the other hand, it is important for the battery pack of multi-battery module structure to release the high temperature gases generated by each battery module effectively. If the high temperature gases generated during the charging and discharging process are not effectively released, heat accumulation will occur, which will accelerate the degradation of the battery module, and in some cases, ignition or explosion may occur. In addition, the heat of the gases can be transferred to other normally operating battery module, resulting in the degradation or explosion of the entire battery module contained within the battery pack.

### [Related-Art Documents]

Korean Registered Patent Publication No. 10-2018-0112617
Chinese Registered Patent Publication No. 111 668 408 A
Chinese Registered Patent Publication No. 113 540 684 A
European Registered Patent Publication No. 3 926 747 A1

### [Disclosure]

### [Technical Problem]

Therefore, the present invention is directed to solving the above mentioned problems, and aims to provide a battery pack capable of rapidly venting high temperature gases to the outside when degradation occurs in a cell stack assembly of any one of the plurality of cell stack assembly, resulting in the release of high temperature gases.

Further, it is an object of the present invention to provide a battery pack capable of preventing the transfer of heat of the high temperature gas to other neighboring cell stack assembly when degradation occurs in any of the cell stack assembly of the plurality of cell stack assembly, resulting in the release of a high temperature gas.

Other objects and advantages of the present invention will be understood from the following description, and will become apparent from the example embodiments of the present invention. Furthermore, it will be readily apparent that the objects and advantages of the present invention may be realized by the methods and combinations thereof disclosed in the claims of the patent.

### [Technical Solution]

According to the present invention, there is provided a battery pack characterized by the features defined in claim 1.

The supplementary partition wall may be open at one side where it engages with the side wall to allow the gas flow path to connect with the gas venting path of the side wall. The suction hole may be formed at least one on a side of the supplementary partition wall.

The pack case further including a main partition wall extending across a center of the base plate, wherein the supplementary partition wall may be coupled at both ends to the main partition wall and the side wall, respectively.

The supplementary partition wall may be arranged on the base plate to be spaced at predetermined intervals along the main partition wall.

The first gas flow path may include a plurality of second gas flow paths compartmentalized and formed by sub-partition part of the partition wall.

The suction hole may be formed in one side of the supplementary partition wall to connect with all of the plurality of the second gas flow paths.

The second gas flow path may be connected to the gas venting path of the side wall.

The pack case may include an exhaust hole open to the outside to allow gas to enter and out of at least one of the front and rear surfaces.

The gas venting path may be formed extending along the longitudinal direction of the side wall to connect with the exhaust hole.

The cross-sectional area size of the gas venting path may be larger than the cross-sectional area size of the gas flow path.

### [Advantageous Effects]

According to the present invention, it is possible to prevent the battery pack from igniting or exploding even if degradation of cell stack assembly or high temperature gases are generated in the cell stack assembly contained in the battery pack.

In addition, according to the present invention, it is possible to prevent the phenomenon of heat transfer by transferring high temperature gas generated in a cell stack assembly to a neighboring other cell stack assembly.

### [Brief Description of the Drawings]

FIG. 1 is a top view of a battery pack according to a first embodiment of the present invention.
FIG. 2 is a cross-sectional view of a side wall of a battery pack according to a first embodiment of the present invention.
FIG. 3 is a partial perspective view of a battery pack according to a first embodiment of the present invention.
FIG. 4 is a perspective view of a supplementary partition wall included in a battery pack according to a first embodiment of the present invention.
FIG. 5 is a side view of a supplementary partition wall of a battery pack according to a first embodiment of the present invention.
FIG. 6 is a cross-sectional view of a supplementary partition wall of a battery pack according to a first embodiment of the present invention.
FIG. 7 is a diagram illustrating the direction of flow of gases generated in a module space located adjacent to both sides of a supplementary partition wall included in a battery pack according to a first embodiment of the present invention.
FIG. 8 is a partial cross-section of a supplementary partition wall of a battery pack according to a first embodiment of the present invention.
FIG. 9 is a diagram illustrating a part of a side wall included in a battery pack according to a first embodiment of the present invention.
FIG. 10 is a diagram illustrating a simplified connection of a supplementary partition wall and side wall of a battery pack according to a first embodiment of the present invention.
FIG. 11 is a diagram illustrating a variation of a side wall of a battery pack according to a first embodiment of the present invention.
FIG. 12 is a partially enlarged view of a battery pack according to a first embodiment of the present invention.
FIG. 13 is a perspective view of a supplementary partition wall included in a battery pack according to a second embodiment of the present invention.
FIG. 14 is a partial perspective view of a battery pack with a supplementary partition wall according to a second embodiment of the present invention.

### [Detailed Description of the Preferred Embodiments]

Hereinafter, the present invention will be described in detail. Prior to this, terms or words used in the present specification and claims should not be restrictively interpreted as ordinary meanings or dictionary-based meanings, but should be interpreted as meanings and concepts consistent with the technical ideas of the present invention on the basis of the principle that an inventor can properly define the concept of a term to describe and explain his or her invention in the best way.

Therefore, the exemplary embodiments described herein and the configurations illustrated in the drawings in present disclosure are just a preferred embodiments of the invention and are not representative of all of the technical ideas of the invention, so that it is to be understood that there may be various equivalents and modifications that may be substituted for them in the present invention.

Furthermore, in the description of the invention, detailed descriptions of relevant known configurations or features are ruled out if it is determined that the detailed description would obscure the essence of the invention.

The embodiments disclosed herein are provided for more perfect explanation of the present disclosure, and thus the shape, size and the like of components may be exaggerated, omitted or simplified in the drawings for better understanding. Thus, the size and ratio of components in the drawings do not wholly reflect the actual size and ratio.

The battery pack of the present invention contains a plurality of cell stack assembly, and electrically connects the cell stack assemblies received in series and/or in parallel in order that the battery pack has one output.

The cell stack assembly includes a plurality of cells electrically connected to each other. Specifically, the cell stack assembly includes a cell stack having a plurality of cells stacked in a unidirectional orientation, and a busbar electrically connected to electrode leads of the cell stack, and a busbar frame coupled to a front and rear surface of the cell stack, respectively.

As desired, the cell stack assembly may further include end plates that are coupled to protect the busbar frame from external impact.

Further, the cell stack assembly may further include a module frame that encloses a perimeter of the cell stack and couples with the busbar frame or end plate to protect the sides of the cell stack.

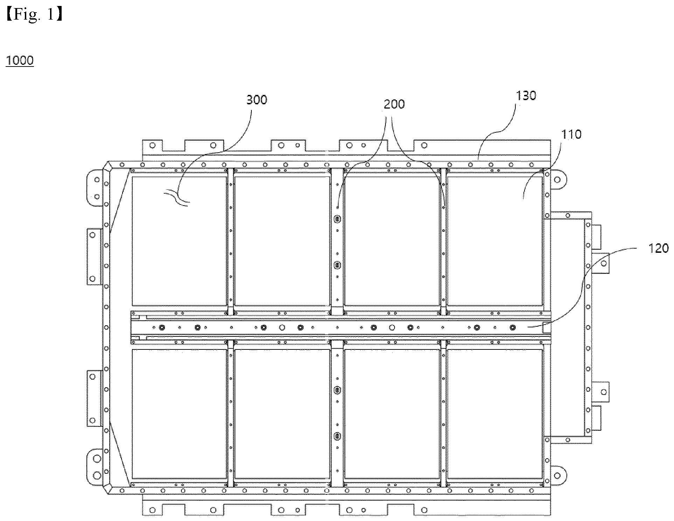

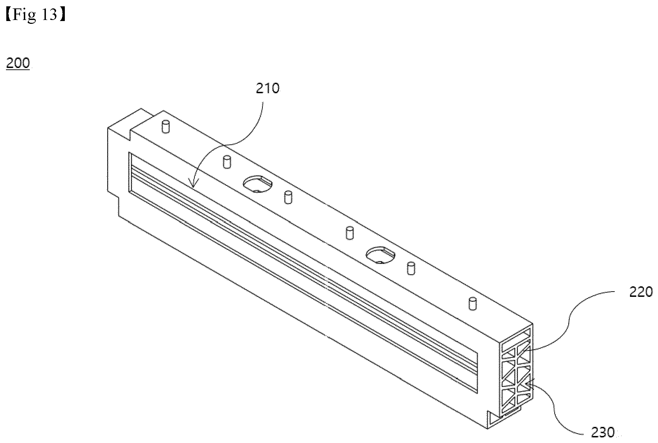

FIG. 1 to FIG. 12 relate to a battery pack according to a first embodiment of the present invention, and FIG. 13 to FIG. 14 relate to a battery pack according to a second embodiment of the present invention.

Hereinafter, each embodiment will be described with reference to the accompanying drawings.

### [Modes of Invention]

### [First embodiment]

FIG. 1 is a top view of a battery pack 1000 of the present invention.

Referring to FIG. 1, a battery pack 1000 of the present invention includes a pack case and a supplementary partition wall 200.

The pack case provides a space in which the cell stack assembly is mounted, and includes a base plate 110 and side wall 130.

The base plate 110 corresponds to the bottom of the battery pack 1000 and serves to support the lower part of the cell stack assembly contained in the battery pack 1000.

The side wall 130 serves to support a side part of the cell stack assembly located on the base plate 110. Specifically, the side wall 130 extends along a border of the base plate 110 and is coupled to an end of the base plate 110.

The side wall 130 has a hollow structure including a gas venting path 131 inside.

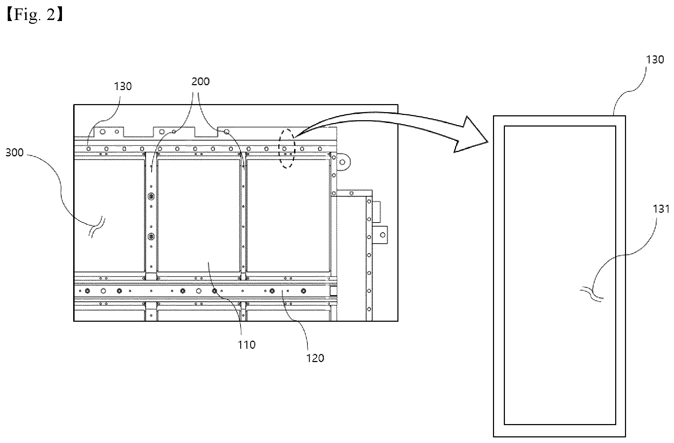

FIG. 2 is a cross-sectional view of a part of a side wall 130 included in the battery pack 1000 of FIG. 1.

The side wall 130 includes a gas venting path 131 as shown in FIG. 2, which is hollowed to allow gas to flow through.

The pack case may further include a main partition wall 120 extending across a center of the base plate 110.

The main partition wall 120 divides the space in which the cell stack assembly is contained in half.

The supplementary partition wall 200 is coupled to the pack case to compartmentalize the space inside the pack case.

The supplementary partition wall 200 specifically compartmentalizes the space inside the pack case and is coupled to the base plate 110. Therefore, each cell stack assembly is separately mounted in the space compartmentalized by the supplementary partition wall 200.

The supplementary partition wall 200 serves to separate each cell stack assembly and also serves to support each cell stack assembly through its two sides.

The supplementary partition wall 200 is coupled to the base plate 110 and the side wall 130 of the pack case.

The supplementary partition wall 200 is coupled to the side wall 130, wherein the two ends are provided in a position opposite each other if the main partition wall 120 is not applied. Further, the supplementary partition wall 200 is coupled to the main partition wall 120 and the side wall 130, wherein the two ends are coupled to each other if the main partition wall 120 is applied.

Two neighboring cell stack assemblies are contained in the battery pack 1000 by being separated from each other by the supplementary partition wall 200.

The supplementary partition wall 200 is arranged on the base plate 110 to be spaced a predetermined distance apart along the main partition wall 120 as shown in FIG. 1, and the spacing of the pair of the supplementary partition wall 200 spaced apart is preferably equal to or greater than the width length of the cell stack assembly.

The battery pack 1000 of the present invention are further compartmentalized by a combination of the pack case and supplementary partition wall 200.

The battery pack 1000 of the present invention includes a plurality of module space 300, which are compartmentalized by a main partition wall 120, side wall 130, and supplementary partition wall 200 of the pack case.

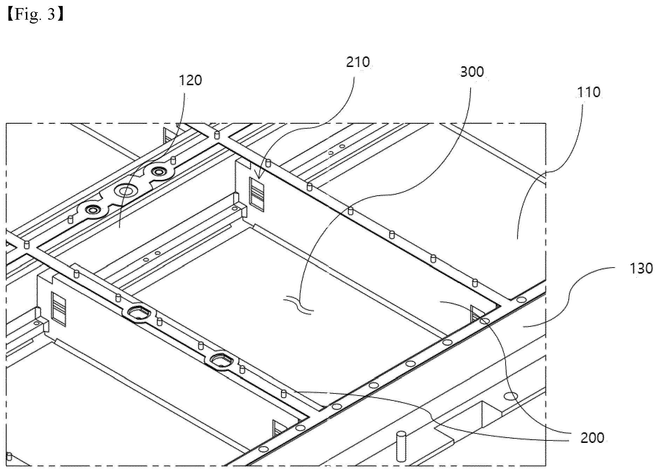

FIG. 3 is a partial perspective view of the battery pack 1000 of the FIG. 1.

According to the FIG. 3, the module space 300 is formed by being enclosed by main partition wall 120, side wall 130 and supplementary partition wall 200.

A plurality of cell stack assembly may be separated from each other, with one cell stack assembly contained in each of the module space 300.

The supplementary partition wall 200 of the present invention includes internally a gas flow path 230 in connection with the gas venting path 131 of the side wall 130.

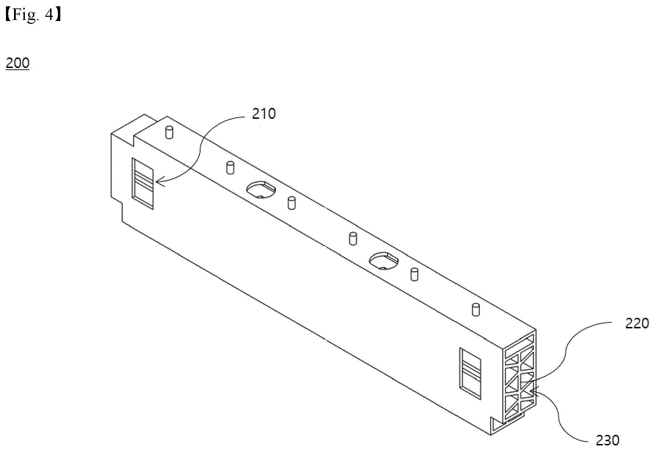

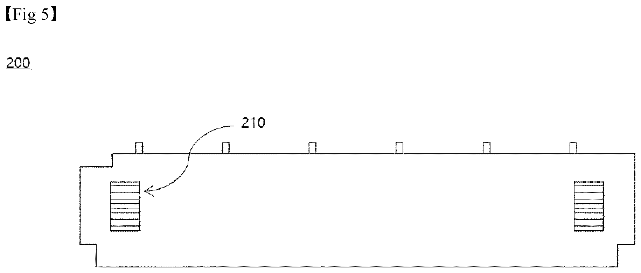

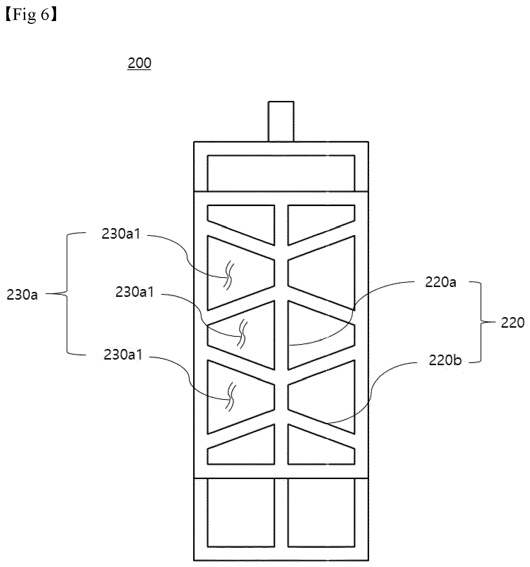

FIG. 4 is a perspective view of a supplementary partition wall 200 included in a battery pack 1000 according to a first embodiment of the present invention, FIG. 5 is a side view of the supplementary partition wall 200 of FIG. 4, and FIG. 6 is a cross-sectional view of the supplementary partition wall 200 of FIG. 4.

The supplementary partition wall 200 has a hollow structure including gas flow path 230 inside, as shown.

The sides of the supplementary partition wall 200 include suction hole 210 formed by penetration through the side wall 130 of the supplementary partition wall 200 for connecting the gas flow and the module space 300 adjacent to the supplementary partition wall 200. In other words, the supplementary partition wall 200 includes a suction hole 210 on the side corresponding to the gas flow path 230 inside.

By the suction hole 210, the module space 300 and the gas flow path 230 of the supplementary partition wall 200 adjacent to the module space 300 may be connected, and if gas is generated in the cell stack assembly contained in the module space 300, the gas may be entering into the gas flow path 230 through the suction hole 210.

The suction hole 210 may be formed in a plurality on one side of the supplementary partition wall 200.

Furthermore, the suction hole 210 are preferably formed on both sides of the supplementary partition wall 200, respectively.

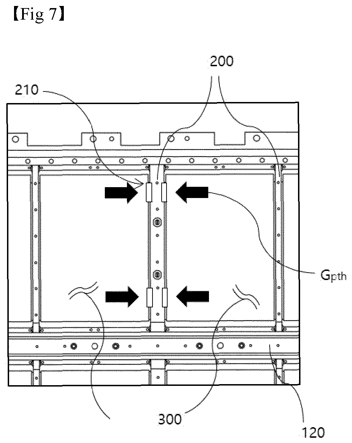

FIG. 7 is a diagram illustrating the direction of flow of gases Gₚₜₕ generated in a module space 300 located adjacent to both sides of a supplementary partition wall 200. Because each module space 300 is sealed except for the suction hole 210, if gas is generated from a cell stack assembly contained in the module space 300, the gas released from the cell stack assembly will flow into the suction hole 210 of the adjacent supplementary partition wall 200 as shown in the direction of flow of gases Gₚₜₕ shown in FIG. 7.

The gas flow path 230 included in the supplementary partition wall 200 is connected to the different module space 300 through the suction hole 210 formed on both sides of the supplementary partition wall 200.

The interior of the supplementary partition wall 200 includes a partition wall extending along the longitudinal direction of the supplementary partition wall 200 to compartmentalize the gas flow path 230, as shown in FIG. 4 and FIG. 6.

The partition wall includes a main partition part 220a and a plurality of sub-partition parts 220b.

Specifically, this main partition part 220a is formed to extend in the direction of the thickness of the supplementary partition wall 200, in order to divide the gas flow path 230 into two sides centered on the main partition part 220a.

The gas flow path 230 includes a pair of first gas flow path 230a compartmentalized and formed by the main partition part 220a of the partition wall.

Therefore, even if the gas generated in any one module space 300 enters the first gas flow path 230a of the supplementary partition wall 200, it is blocked by the main partition part 220a of the partition wall and does not flow back into the neighboring module space 300.

The sub-partition part 220b includes a sub-partition part 220b extending from the main partition part 220a to an inner surface of the supplementary partition wall 200 and for compartmentalize the first gas flow path 230a in the direction of the thickness of the supplementary partition wall 200.

The sub-partition part 220b may be formed on each side of the main partition part 220a, and is preferably included at least one on one side of the main partition part 220a.

The first gas flow path 230a includes a plurality of second gas flow paths 230a1 compartmentalized and formed by sub-partition part 220b of the partition wall.

**In** other words, the gas flow path 230 inside the supplementary partition wall 200 of the present invention can be divided into a pair of first gas flow paths 230a by the main partition part 220a of the partition wall, and the divided first gas flow paths 230a can be further divided into a plurality of second gas flow path 230a1 by the sub-partition part 220b of the partition wall.

A plurality of second gas flow paths 230a1 formed on one side of the main partition part 220a are preferably connected to the same suction hole 210.

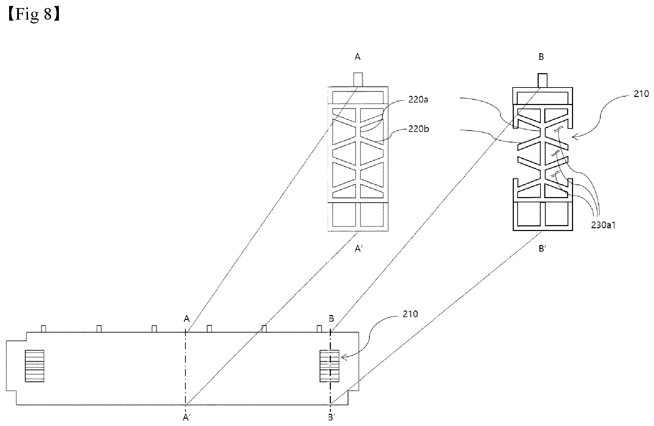

FIG. 8 is a partial cross-sectional view of the supplementary partition wall 200 of FIG. 5.

Referring to the cross-section of the supplementary partition wall 200 in the part where the suction hole 210 is formed in FIG. 8, a plurality of second gas flow paths 230a1 are connected with one suction hole 210. In other words, the gas generated in the module space 300 is entered into the interior of the supplementary partition wall 200 through the suction hole 210 in the supplementary partition wall 200 adjacent to the module space 300, and the entered gas is simultaneously flowed through the plurality of second gas flow paths 230a1 formed by the partition wall in the interior of the supplementary partition wall 200. However, the entered gas is prevented from entering the gas flow path 230 located on the opposite side by the main partition part 220a as shown, and is further prevented from being transferred to the neighboring module space 300.

The supplementary partition wall 200 is open at one side where it is coupled with the side wall 130 for connecting a gas flow path 230 to the gas venting path 131 of the side wall 130, as shown in FIG. 4.

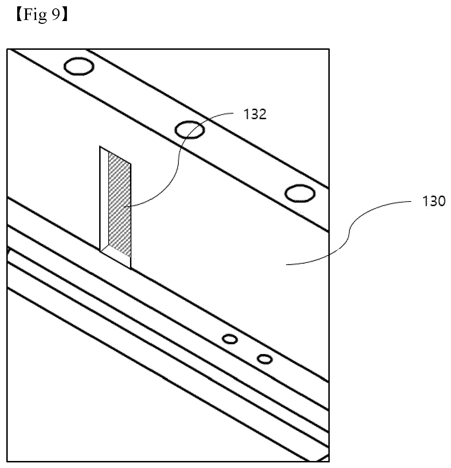

FIG. 9 illustrates a partial view of the side wall 130 excluding the supplementary partition wall 200 configuration. According to FIG. 9, an insertion hole 132 is formed in the inner surface of the side wall 130 into which the supplementary partition wall 200 is inserted.

The supplementary partition wall 200 is coupled with the side wall 130 so that the supplementary partition wall 200 is inserted into an insertion hole 132 in the side wall 130 to connect the gas flow path 230 with the gas venting path 131 of the side wall 130.

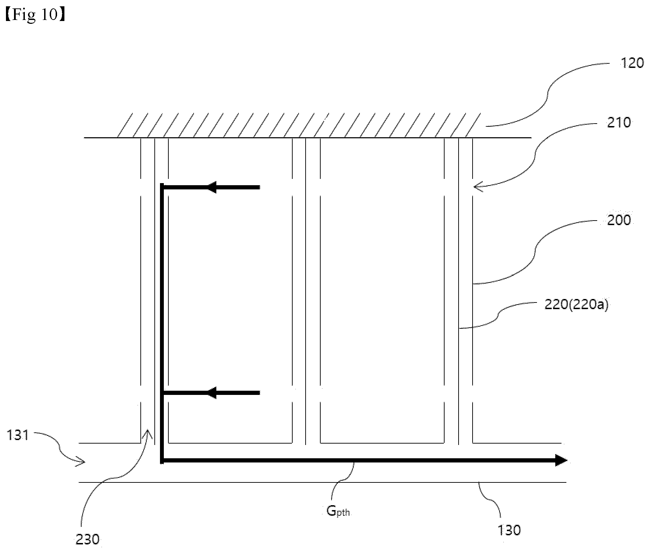

FIG. 10 is a simplified illustration of the connection of the supplementary partition wall 200 and the side wall 130, wherein a plurality of supplementary partition wall 200 is connected to a single side wall 130. Each of the supplementary partition wall 200 is coupled to the side wall to connect a gas flow path 230 to the gas venting path 131 of the side wall 130.

Referring to the direction of flow of gases Gₚₜₕ of FIG. 10, the gas generated in the module space 300 flows through the gas flow path 230 of the supplementary partition wall 200 and then enters the gas venting path 131 of the side wall 130 coupled to the supplementary partition wall 200 and flows along the side wall 130.

The cross-sectional area of the gas venting path 131 of the side wall 130 is preferably larger than the cross-sectional area of the gas venting path 131 of the supplementary partition wall 200 to allow more smooth flow of gas generated in the module space 300 and flowing through the gas flow path 230 to the gas venting path 131. In other words, the gas flowing through the gas flow path 230 can flow smoothly toward the gas venting path 131 having a larger space volume than the gas flow path 230 and having a lower pressure.

The space volume of the gas venting path 131 is larger than the space volume of the second gas flow path 230a1inside the supplementary partition wall 200. Therefore, the gas that flows through the second gas flow path 230a1 and enters the gas venting path 131 may not flow back into the second gas flow path 230a1.

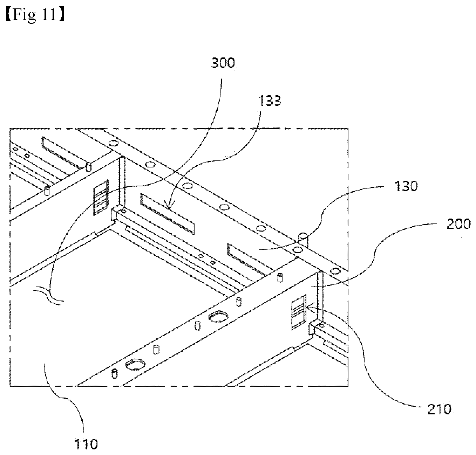

FIG. 11 illustrates a variation of the side wall 130.

According to FIG. 11, the side wall 130 includes a supplementary sub-suction hole 133 opened on an inner side facing the module space 300.

The supplementary sub-suction hole 133 connects between the gas venting path 131 inside the side wall 130 and the module space 300, which allows a direct flow of gas generated in the module space 300 into the gas venting path 131.

The battery pack 1000 of the present invention includes an exhaust hole 400 opened to the outside in connection with a gas venting path 131 in the side wall 130. In other words, the gas venting path 131 is formed extending along the longitudinal direction of the side wall 130 and is open to the outside through at least one of the front and rear sides of the pack case.

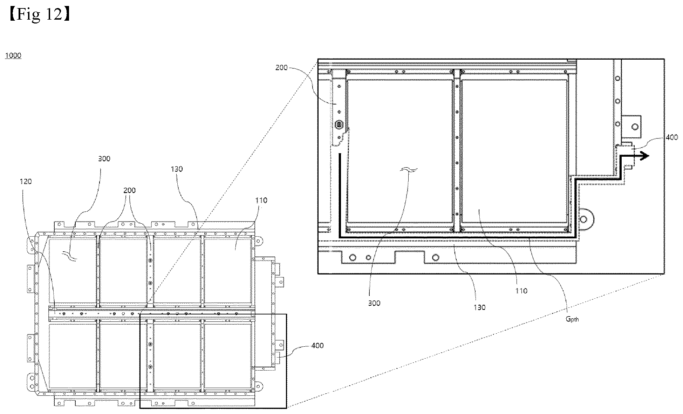

FIG. 12 is a partially enlarged view of a battery pack 1000 according to a first embodiment of the present invention.

According to the gas flow path 230 shown in FIG. 12, the gas flowed along the gas flow path 230 of the supplementary partition wall 200 and the gas venting path 131 of the side wall 130 is released to the outside of the battery pack 1000 through the exhaust hole 400. Therefore, the gas generated in the module space 300, flowing through the gas flow path 230 and entering the gas venting path 131, can be released to the outside of the battery pack 1000 through the exhaust hole 400 after flowing along the gas venting path 131.

### [Second embodiment]

FIG. 13 is a perspective view of a supplementary partition wall 200 included in a battery pack 1000 according to a second embodiment of the present invention.

The suction hole 210 may be formed to extend along the longitudinal direction of the supplementary partition wall 200 as shown in FIG. 13. In other words, the suction hole 210 may be formed to extend along the longitudinal direction of the supplementary partition wall 200 to make the entire second gas flow path 230a1 wide open to the module space 300.

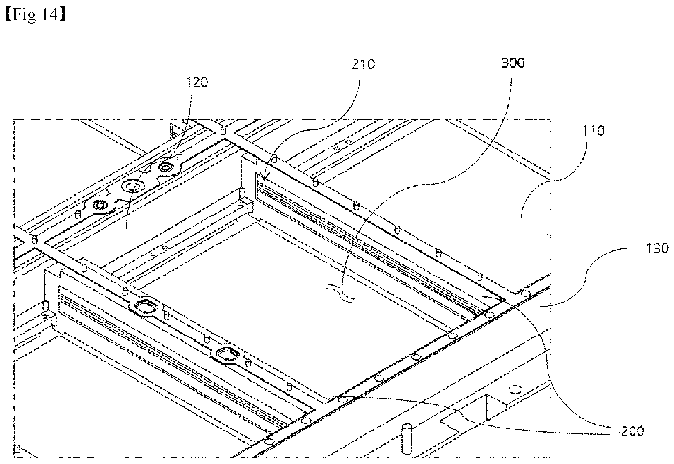

FIG. 14 is a partial perspective view of a battery pack 1000 with the supplementary partition wall 200 of FIG. 13.

In FIG. 13 and FIG. 14, the high temperature gases generated in the module space 300 can flow into the gas flow path 230 of the supplementary partition wall 200 in a shorter time than in the first embodiment by the suction hole 210 formed by an extended along the supplementary partition wall 200.

The present invention has been described in more detail above with reference to the drawings and embodiments.

### [Description of Reference Numerals]

1000: battery pack
110: base plate
120: main partition wall
130: side wall
131: gas venting path
132: insertion hole
133: sub-suction hole
200: supplementary partition wall
210: suction hole
220: partition wall
220a: main partition part
220b: sub-partition part
230: gas flow path
230a: first gas flow path
230a1: second gas flow path
300: module space
400: exhaust hole
Gₚₜₕ: direction of flow of gas

## Claims

1. A battery pack (1000) comprising:
a cell stack assembly that includes a plurality of cells,
a pack case in which the cell stack assembly is mounted; and
a supplementary partition wall (200) coupled to the pack case to compartmentalize a space inside the pack case;
wherein the pack case comprises,
a base plate (110) supporting a lower part of the mounted cell stack assembly; and
a side wall (130) of hollow structure coupled to the base plate (110) to support a side part of the cell stack assembly, and including a gas venting path (131) internally; and
wherein the supplementary partition wall (200) is coupled to the base plate (110) and the side wall (130) of the pack case and comprises:
- a gas flow path (230) internally in connection with the gas venting path (131) of the side wall (130), and
- a suction hole (210) on a side corresponding to the gas flow path (230),
wherein the interior of the supplementary partition wall (200) comprises a partition wall (220) extending along a length direction of the supplementary partition wall (200) and compartmentalizing the gas flow path (230),
wherein the partition wall (220) comprises a main partition part (220a) extending along a thickness direction of the supplementary partition wall (200) and compartmentalizing the gas flow path (230), and
wherein the gas flow path (230) comprises a pair of first gas flow paths compartmentalized and formed by the main partition part (220a) of the partition wall (220),
wherein the partition wall (220) further comprises a sub-partition part (220b) extending from the main partition part (220a) to an inner surface of the supplementary partition wall (200) to compartmentalize the first gas flow path in the thickness direction of the supplementary partition wall (200).

2. The battery pack (1000) of claim 1, wherein the supplementary partition wall (200) is open at one side where it engages with the side wall (130) to allow the gas flow path (230) to connect with the gas venting path (131) of the side wall (130).

3. The battery pack (1000) of claim 1, wherein the suction hole (210) is formed at least one on a side of the supplementary partition wall (200).

4. The battery pack (1000) of claim 1, wherein the pack case further comprising a main partition wall (120) extending across a center of the base plate (110), wherein the supplementary partition wall (200) is coupled at both ends to the main partition wall (120) and the side wall (130), respectively.

5. The battery pack (1000) of claim 4, wherein the supplementary partition wall (200) is arranged on the base plate (110) to be spaced at predetermined intervals along the main partition wall (120).

6. The battery pack (1000) of claim 1, wherein the first gas flow path comprises a plurality of second gas flow paths compartmentalized and formed by the sub-partition part (220b) of the partition wall (220).

7. The battery pack (1000) of claim 6, wherein the suction hole (210) is formed in one side of the supplementary partition wall (200) to connect with all of the plurality of the second gas flow paths.

8. The battery pack (1000) of claim 6, wherein the second gas flow path is connected to the gas venting path (131) of the side wall (130).

9. The battery pack (1000) of claim 1, wherein the pack case comprises an exhaust hole (400) open to the outside to allow gas to enter and out of at least one of front and rear surfaces.

10. The battery pack (1000) of claim 9, wherein the gas venting path (131) is formed extending along the longitudinal direction of the side wall (130) to connect with the exhaust hole (400).

11. The battery pack (1000) of claim 1, wherein the gas venting path (131) has a cross-sectional area size which is larger than a cross-sectional area size of the gas flow path (230).

## Patentansprüche

1. Batteriepack (1000), umfassend:
eine Zellenstapelanordnung, welche eine Mehrzahl von Zellen umfasst,
ein Packgehäuse, in welchem die Zellenstapelanordnung montiert ist; und
eine zusätzliche Trennwand (200), welche mit dem Packgehäuse gekoppelt ist, um einen Raum innerhalb des Packgehäuses zu unterteilen;
wobei das Packgehäuse umfasst:
eine Basisplatte (110), welche einen unteren Teil der montierten Zellenstapelanordnung haltert; und
eine Seitenwand (130) aus einer hohlen Struktur, welche mit der Basisplatte (110) gekoppelt ist, um einen Seitenteil der Zellenstapelanordnung zu haltern, und welche innenliegend einen Gasentlüftungspfad (131) umfasst; und
wobei die zusätzliche Trennwand (200) mit der Basisplatte (110) und der Seitenwand (130) des Packgehäuses gekoppelt ist und umfasst:
- innenliegend einen Gasströmungspfad (230), welcher mit dem Gasentlüftungspfad (131) der Seitenwand (130) in Verbindung steht, und
- ein Saugloch (210) an einer Seite, welche dem Gasströmungspfad (230) entspricht,
wobei das Innere der zusätzlichen Trennwand (200) eine Trennwand (220) umfasst, welche sich entlang einer Längenrichtung der zusätzlichen Trennwand (200) erstreckt und den Gasströmungspfad (230) unterteilt,
wobei die Trennwand (220) einen Haupttrennteil (220a) umfasst, welcher sich entlang einer Dickenrichtung der zusätzlichen Trennwand (200) erstreckt und den Gasströmungspfad (230) unterteilt, und
wobei der Gasströmungspfad (230) ein Paar von ersten Gasströmungspfaden umfasst, welche unterteilt sind und durch den Haupttrennteil (220a) der Trennwand (220) gebildet sind,
wobei die Trennwand (220) ferner einen Untertrennteil (220b) umfasst, welcher sich von dem Haupttrennteil (220a) zu einer inneren Fläche der zusätzlichen Trennwand (200) erstreckt, um den ersten Strömungspfad in der Dickenrichtung der zusätzlichen Trennwand (200) zu unterteilen.

2. Batteriepack (1000) nach Anspruch 1, wobei die zusätzliche Trennwand (200) an einer Seite offen ist, an welcher sie mit der Seitenwand (130) in Eingriff tritt, um zu ermöglichen, dass der Gasströmungspfad (230) mit dem Gasentlüftungspfad (131) der Seitenwand (130) verbunden ist.

3. Batteriepack (1000) nach Anspruch 1, wobei das Saugloch (210) wenigstens an einer Seite der zusätzlichen Trennwand (200) gebildet ist.

4. Batteriepack (1000) nach Anspruch 1, wobei das Packgehäuse ferner eine Haupttrennwand (120) umfasst, welche sich über eine Mitte der Basisplatte (110) erstreckt, wobei die zusätzliche Trennwand (200) an beiden Enden mit der Haupttrennwand (120) bzw. der Seitenwand (130) gekoppelt ist.

5. Batteriepack (1000) nach Anspruch 4, wobei die zusätzliche Trennwand (200) derart an der Basisplatte (110) angeordnet ist, dass sie entlang der Haupttrennwand (120) in vorbestimmten Intervallen beabstandet ist.

6. Batteriepack (1000) nach Anspruch 1, wobei der erste Gasströmungspfad eine Mehrzahl von zweiten Gasströmungspfaden umfasst, welche unterteilt sind und durch den Untertrennteil (220b) der Trennwand (220) gebildet sind.

7. Batteriepack (1000) nach Anspruch 6, wobei das Saugloch (210) in einer Seite der zusätzlichen Trennwand (200) gebildet ist, um mit allen der Mehrzahl der zweiten Gasströmungspfade verbunden zu sein.

8. Batteriepack (1000) nach Anspruch 6, wobei der zweite Gasströmungspfad mit dem Gasentlüftungspfad (131) der Seitenwand (130) verbunden ist.

9. Batteriepack (1000) nach Anspruch 1, wobei das Packgehäuse ein Auslassloch (400) umfasst, welches zu dem Äußeren offen ist, um zu ermöglichen, dass Gas in wenigstens eine einer vorderen und einer hinteren Fläche eintritt und daraus austritt.

10. Batteriepack (1000) nach Anspruch 9, wobei der Gasentlüftungspfad (131) derart gebildet ist, dass er sich entlang der longitudinalen Richtung der Seitenwand (130) erstreckt, um mit dem Auslassloch (400) verbunden zu sein.

11. Batteriepack (1000) nach Anspruch 1, wobei der Gasentlüftungspfad (131) eine Querschnittsflächengröße aufweist, welche größer ist als eine Querschnittsflächengröße des Gasströmungspfads (230).

## Revendications

1. Bloc-batterie (1000) comprenant :
un ensemble empilement de cellules qui comporte une pluralité de cellules,
un boîtier de bloc dans lequel l'ensemble empilement de cellules est monté ; et
une paroi de séparation supplémentaire (200) accouplée au boîtier de bloc pour compartimenter un espace à l'intérieur du boîtier de bloc ;
dans lequel le boîtier de bloc comprend,
une plaque de base (110) supportant une partie inférieure de l'ensemble empilement de cellules monté ; et
une paroi latérale (130) de structure creuse accouplée à la plaque de base (110) pour supporter une partie latérale de l'ensemble empilement de cellules, et comportant un chemin d'évacuation de gaz (131) de manière interne ; et
dans lequel la paroi de séparation supplémentaire (200) est accouplée à la plaque de base (110) et à la paroi latérale (130) du boîtier de bloc et comprend :
- un chemin d'écoulement de gaz (230) en liaison interne avec le chemin d'évacuation de gaz (131) de la paroi latérale (130), et
- un orifice d'aspiration (210) sur un côté correspondant au chemin d'écoulement de gaz (230),
dans lequel l'intérieur de la paroi de séparation supplémentaire (200) comprend une paroi de séparation (220) s'étendant le long d'une direction de longueur de la paroi de séparation supplémentaire (200) et compartimentant le chemin d'écoulement de gaz (230),
dans lequel la paroi de séparation (220) comprend une partie de séparation principale (220a) s'étendant le long d'une direction d'épaisseur de la paroi de séparation supplémentaire (200) et compartimentant le chemin d'écoulement de gaz (230), et
dans lequel le chemin d'écoulement de gaz (230) comprend une paire de premiers chemins d'écoulement de gaz compartimentés et formés par la partie de séparation principale (220a) de la paroi de séparation (220),
dans lequel la paroi de séparation (220) comprend en outre une sous-partie de séparation (220b) s'étendant de la partie de séparation principale (220a) à une surface intérieure de la paroi de séparation supplémentaire (200) pour compartimenter le premier chemin d'écoulement de gaz dans la direction d'épaisseur de la paroi de séparation supplémentaire (200).

2. Bloc-batterie (1000) selon la revendication 1, dans lequel la paroi de séparation supplémentaire (200) est ouverte d'un côté où elle est en prise avec la paroi latérale (130) pour permettre au chemin d'écoulement de gaz (230) de rejoindre le chemin d'évacuation de gaz (131) de la paroi latérale (130).

3. Bloc-batterie (1000) selon la revendication 1, dans lequel le trou d'aspiration (210) est formé au moins un sur un côté de la paroi de séparation supplémentaire (200).

4. Bloc-batterie (1000) selon la revendication 1, dans lequel le boîtier de bloc comprend en outre une paroi de séparation principale (120) s'étendant sur un centre de la plaque de base (110), dans lequel la paroi de séparation supplémentaire (200) est accouplée aux deux extrémités à la paroi de séparation principale (120) et à la paroi latérale (130), respectivement.

5. Bloc-batterie (1000) selon la revendication 4, dans lequel la paroi de séparation supplémentaire (200) est agencée sur la plaque de base (110) pour être espacée à des intervalles prédéterminés le long de la paroi de séparation principale (120).

6. Bloc-batterie (1000) selon la revendication 1, dans lequel le premier chemin d'écoulement de gaz comprend une pluralité de seconds chemins d'écoulement de gaz compartimentés et formés par la sous-partie de séparation (220b) de la paroi de séparation (220).

7. Bloc-batterie (1000) selon la revendication 6, dans lequel le trou d'aspiration (210) est formé dans un côté de la paroi de séparation supplémentaire (200) pour rejoindre la totalité de la pluralité des seconds chemins d'écoulement de gaz.

8. Bloc-batterie (1000) selon la revendication 6, dans lequel le second chemin d'écoulement de gaz est relié au chemin d'évacuation de gaz (131) de la paroi latérale (130).

9. Bloc-batterie (1000) selon la revendication 1, dans lequel le boîtier de bloc comprend un trou d'échappement (400) ouvert vers l'extérieur pour permettre au gaz d'entrer et de sortir par au moins une parmi des surfaces avant ou arrière.

10. Bloc-batterie (1000) selon la revendication 9, dans lequel le chemin d'évacuation de gaz (131) est formé s'étendant le long de la direction longitudinale de la paroi latérale (130) pour rejoindre le trou d'échappement (400).

11. Bloc-batterie (1000) selon la revendication 1, dans lequel le chemin d'évacuation de gaz (131) a une superficie en coupe transversale qui est supérieure à une superficie en coupe transversale du chemin d'écoulement de gaz (230).
